# DEMANDE DE BREVET EUROPEEN

(11) **EP 1 224 896 A1**
(43) Date de publication de la demande: **24.07.2002**
(21) Numéro de dépôt: 02447007.2
(22) Date de dépôt: 16.01.2002
(51) Int. Cl.: A47J 37/12

(54) **Appareil de cuisson**

(30) Priorité: 17.01.2001 BE 200100040
(71) Demandeur: Ariam S.P.R.L., 1450 Chastre (BE)
(72) Inventeur: Jénicot, Jean Marie, 1450 Chastre (BE)
(74) Mandataire: Powis de Tenbossche, Roland

(57) **Abrégé**

Appareil de cuisson comportant au moins : une cuve de cuisson (2) présentant un fond (2D) et un bord supérieur (2A) définissant l'ouverture supérieure de la cuve, ladite cuve étant avantageusement amovible par rapport à un support (1), au moins un élément chauffant (3) associé à un moyen d'apport d'énergie (7) et éventuellement un panier (11) relié par un système (13) à une poignée (12), dans lequel au moins une pièce choisie parmi le groupe constitué de l'élément chauffant (3) et le panier (11) est apte à être placée dans la cuve (2) en passant par l'ouverture supérieure de la cuve, caractérisé en ce que la cuve (2) présente le long d'une de ses parois latérales (2C) une déformation définissant un canal (10) dont l'extrémité (10A) forme un bec verseur de vidange de la cuve, et en ce qu'un moyen (7 ;13) associé à une pièce (3 ;11) apte à être placée dans la cuve par son ouverture supérieure ou une partie de la pièce (3 ;11) s'étend au moins partiellement dans une partie du canal lorsque ladite pièce est placée au voisinage du fond de la cuve.

## Description

La présente invention a pour objet un appareil de cuisson comportant au moins : une cuve de cuisson présentant un bord supérieur, ladite cuve étant avantageusement amovible par rapport à un support, et au moins un élément chauffant placé dans la cuve, ledit élément chauffant étant associé à un moyen d'apport d'énergie qui passe au dessus d'un bord supérieur de la cuve. L'appareil comporte éventuellement un panier relié par au moins un bras à une poignée, en particulier un panier avec poignée multi fonctionelle.

Des appareils de cuisson de ce type sont décrits par exemple dans EP-A-0067730. Ces appareils connus ne sont pas pourvus de bec verseur pour la vidange du liquide de cuisson. De plus, au voisinage du bord supérieur de la cuve, la résistance passant au-dessus du bord supérieur de la cuve ne s'étend pas dans un canal en retrait par rapport à une paroi de la cuve. De ce fait, le volume de la cuve est surdimensionné et un volume de la cuve adjacent de la paroi latérale le long de laquelle s'étend la résistance est un volume « mort » ou non utile au fonctionnement correct de l'appareil.

On connaît également par le document BE-A-093011701 une cuve présentant une ouverture locale pour le passage de la résistance dans la cuve, un élément amovible d'étanchéification de l'ouverture étant prévu, ledit élément laissant passer la résistance. Cette cuve ne présente pas de bec verseur, ni de canal en retrait dans lequel s'étend au moins partiellement la résistance chauffante.

On connaît enfin par le document EP 0162482 un panier comportant une poignée multi fonctionelle, ledit panier comportant un support placé dans une ouverture de la cuve pour solidariser le panier avec la cuve, le panier étant alors déplacé dans la cuve par un mouvement de rotation de la poignée.

La présente invention a pour objet un appareil de cuisson comportant au moins : une cuve de cuisson présentant un bord supérieur définissant l'ouverture supérieure de la cuve, ladite cuve étant avantageusement amovible par rapport à un support, au moins un élément chauffant associé à un moyen d'apport d'énergie et éventuellement un panier relié par un système à une poignée, dans lequel au moins une pièce choisie parmi le groupe constitué de l'élément chauffant et le panier est apte à être placée dans la cuve au voisinage de son fond en passant par l'ouverture supérieure de la cuve, cet appareil étant caractérisé en ce que la cuve présente le long d'une de ses parois latérales une déformation définissant un canal dont l'extrémité forme un bec verseur de vidange de la cuve, et en ce qu'un moyen associé à une pièce apte à être placée dans la cuve par son ouverture supérieure ou une partie de la pièce s'étend au moins partiellement dans une partie du canal lorsque ladite pièce est placée au voisinage de la cuve.

Avantageusement, ledit appareil comporte au moins : une cuve de cuisson présentant un bord supérieur, ladite cuve étant avantageusement amovible par rapport à un support, et au moins un élément chauffant placé dans la cuve, ledit élément chauffant étant associé à un moyen d'apport d'énergie qui passe au dessus d'un bord de la cuve, l'appareil comportant éventuellement un panier relié par au moins un système à une poignée, en particulier un panier avec poignée multi fonctionelle, cet appareil étant caractérisé en ce que la cuve présente le long d'une de ses parois latérales une déformation définissant un canal dont l'extrémité forme un bec verseur de vidange de la cuve, et en ce que l'élément chauffant ou le moyen d'apport d'énergie s'étend au moins partiellement dans une partie du canal lorsque l'élément chauffant est placé au voisinage du fond de la cuve.

De façon avantageuse, le canal présente un bord supérieur dont au moins une partie est située en dessous du bord supérieur de la paroi le long de laquelle ledit canal s'étend. Ceci est intéressant pour pouvoir utiliser un couvercle ne présentant pas d'ouvertures particulières pour le passage d'une partie de l'élément chauffant. De préférence, un passage est formé entre le bord supérieur du canal et un plan horizontal dans lequel s'étend le bord supérieur de la paroi le long de laquelle ledit canal s'étend, et en ce que l'élément chauffant ou le moyen d'apport d'énergie présente une partie traversant ledit passage.

Selon une forme de réalisation, l'appareil comporte en outre un support pour la cuve, un dispositif de commande solidaire de l'élément chauffant ou comportant des moyens pour y fixer l'élément chauffant ou le moyen d'apport d'énergie à l'élément chauffant, ledit support présentant des moyens de fixation coopérant avec le dispositif de commande. De façon avantageuse, le support présente un passage ou fenêtre dans lequel s'étend au moins une partie du bord supérieur du canal de la cuve.

Selon un détail avantageux, l'appareil suivant l'invention comporte un couvercle avantageusement muni d'un filtre et avantageusement monté à pivotement sur le support.

Selon un détail d'une forme de réalisation, l'appareil suivant l'invention comporte un moyen placé dans la cuve pour former une zone protégée adjacente à la zone de cuisson, ledit moyen étant adapté pour assurer le passage de mousse ou écume de cuisson de la zone de cuisson vers la zone protégée, lorsque l'écume ou la mousse dépasse un niveau prédéterminé dans la zone de cuisson. Un tel moyen est par exemple un moyen tel que décrit dans la demande EP-A-1029493, dont le contenu est inclus dans la présente description par référence.
De façon avantageuse, le moyen est placé dans la cuve de manière à définir une zone protégée adjacente du canal de la cuve.
En particulier, l'appareil comporte un moyen de protection de la partie de l'élément chauffant ou du moyen d'apport d'énergie au voisinage du passage défini au dessus du bord supérieur du canal de la cuve. De préférence, le moyen de protection est formé par une prolongation du moyen placé dans la cuve pour former une zone protégée adjacente du canal de la cuve.

Selon une caractéristique avantageuse de l'appareil suivant l'invention, le canal de la cuve a une profondeur définie par rapport à la paroi de la cuve le long de laquelle le canal s'étend, ladite profondeur variant d'un minimum au voisinage de l'extrémité du canal adjacente du fond de la cuve à un maximum au voisinage de son bord supérieur. Dans le cas où la cuve présente une marque de niveau minimum et/ou une marque de niveau maximum de liquide de cuisson, le canal de la cuve s'étend avantageusement depuis un niveau proche du niveau minimum de liquide de cuisson dans la cuve, de préférence depuis un niveau proche du niveau supérieur de liquide de cuisson.

Selon une particularité d'une forme de réalisation avantageuse, la profondeur du canal au voisinage du bord supérieur est d'au moins 1 cm, en particulier d'au moins 2 cm.

L'invention a également pour objet un élément filtrant particulièrement adapté pour un appareil de cuisson suivant l'invention, mais pouvant également être utilisé pour un appareil de cuisson non suivant l'invention, par exemple un appareil tel que décrit dans la demande EP-A-1029493.

L'élément filtrant suivant l'invention présente au moins une des particularités suivantes, de préférence plusieurs des particularités suivantes :
- des bords latéraux pour glisser dans des cornières ou glissières de la cuve ;
- un treillis filtrant en forme de trapèze, dont le petit côté est dirigé vers le canal ou gouttière d'évacuation de liquide de cuisson hors de la cuve ;
- un treillis filtrant qui lorsqu'il est placé dans la cuve forme un angle compris entre 5 et 60° avec le fond de la cuve ou avec un plan horizontal lorsque la cuve est en position d'utilisation ;
- une ou des parois de guidage guidant le passage de liquide de cuisson vers le treillis ;
- un ou des plats associés au treillis filtrant, le ou lesdits plats présentant un bord supérieur situé à un niveau au-dessus du treillis filtrant ou d'une partie du treillis filtrant tournée vers le fond de la cuve, lorsque l'élément filtrant est placé dans la cuve ;
- un moyen pour attacher l'élément filtrant à la cuve ou au support de la cuve, ledit moyen empêchant l'élément filtrant de sortir hors de la cuve lors d'un renversement ou d'un basculement de la cuve ;
- un moyen pour attacher l'élément filtrant au support de la cuve, ledit moyen empêchant l'élément filtrant de sortir hors de la cuve et empêchant un mouvement de la cuve par rapport au support lors d'un renversement ou d'un basculement de la cuve ;
- des lames élastiques agencées pour prendre appui sur le fond de la cuve et pour former une rampe le long de laquelle des saletés se déplacent vers l'élément filtrant lors d'un renversement ou basculement de la cuve.

Des particularités et détails d'une forme de réalisation d'un appareil suivant l'invention ressortiront de la description détaillée suivante, dans laquelle il est fait référence aux dessins ci-annexés.

Dans ces dessins,
- la figure 1 est une vue schématique en coupe longitudinale d'un appareil suivant l'invention,

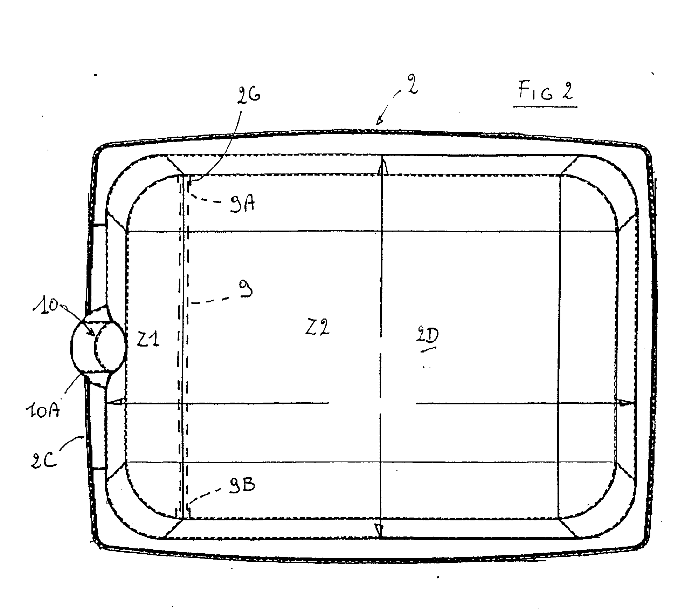

- la figure 2 est une vue de dessus de la cuve,

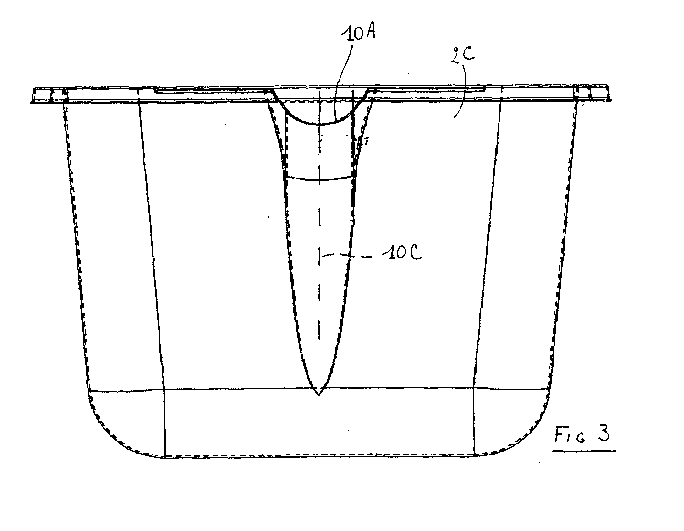

- la figure 3 est une vue latérale de la cuve,

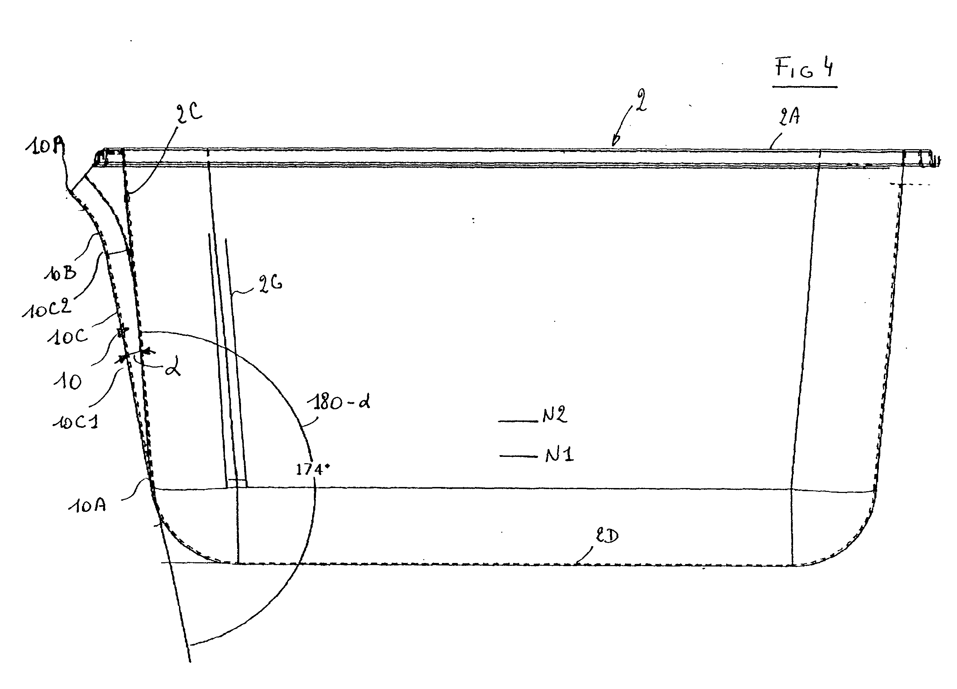

- la figure 4 est une vue en coupe longitudinale de la cuve,
- la figure 5 est une vue en perspective de la cuve,

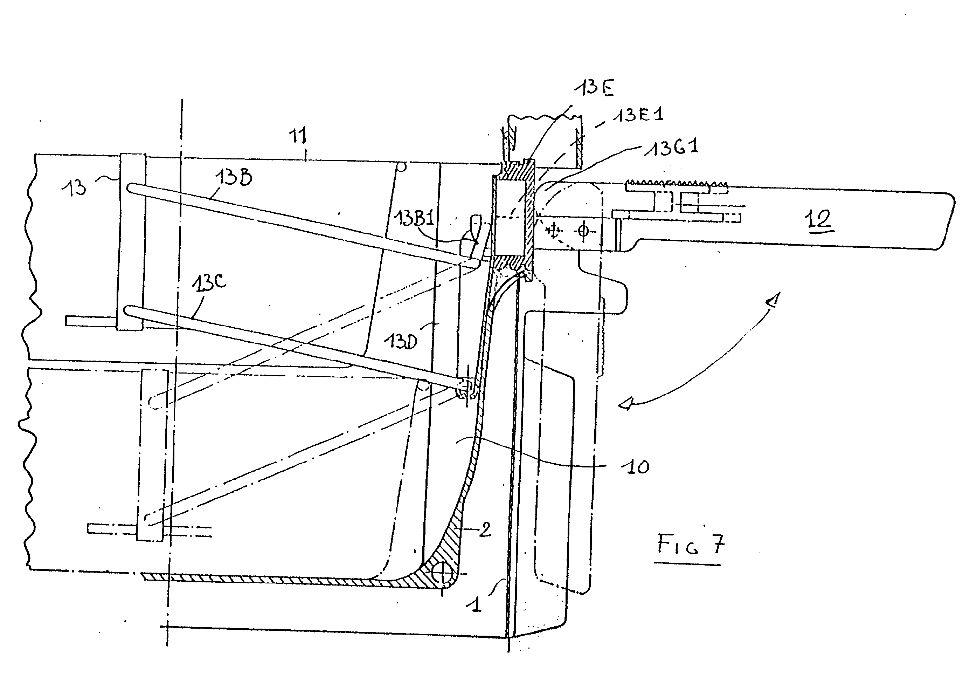

- la figure 6 est une vue en perspective de l'appareil selon la figure 1,
- la figure 7 est une vue schématique en coupe longitudinale d'un autre appareil suivant l'invention, et
- la figure 8 est une vue en perspective d'un élément filtrant pour la cuve de la figure 2.

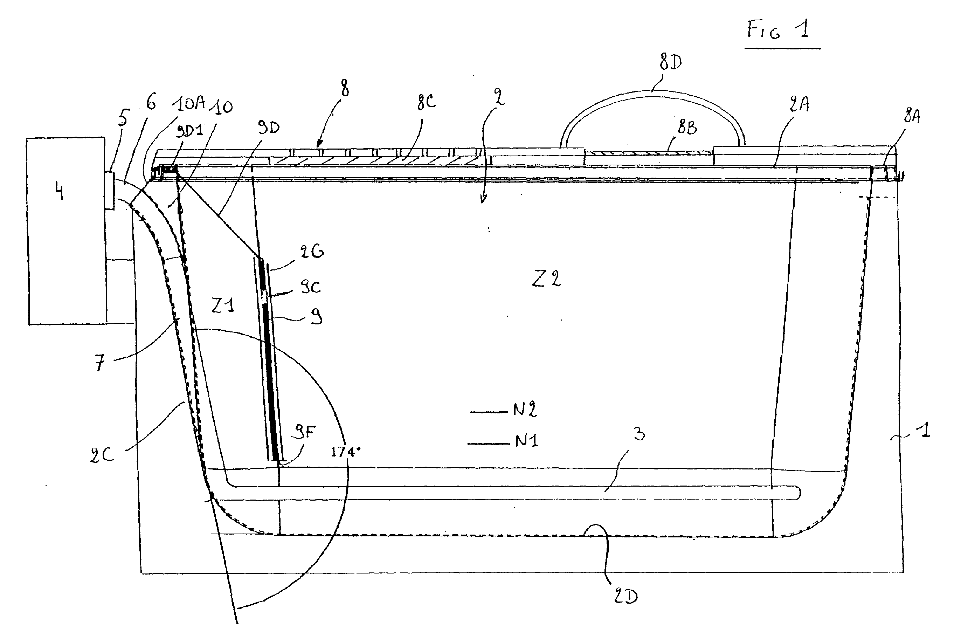

L'appareil de cuisson ou friteuse montré à la figure 1 comporte
- un support 1,
- une cuve 2 par exemple réalisée en aluminium ou en acier inoxydable et de forme sensiblement parallélipipédique, cette cuve étant montée de manière amovible par rapport au support,
- une résistance plongeante 3,
- un dispositif de commande 4 attaché au support 1 de manière amovible et présentant des moyens 5 recevant de manière amovible des plots 6 reliés à la résistance électrique 3 par des bras 7, dans lesquels sont situés un ou des moyens conducteurs de l'électricité vers la résistance 3,
- un couvercle 8 dont les bords 8A prennent appui sur le bord supérieur 2A de la cuve, ce couvercle comportant un hublot 8B, un filtre 8C et une poignée 8D, et
- une paroi 9 placée dans la cuve 2 pour diviser la cuve en une zone calme Z1 et une zone de cuisson Z2.

La cuve 2 présente le long d'une face latérale 2C un canal 10 disposé en retrait par rapport à la dite paroi 2C, c'est-à-dire un canal dirigé vers l'extérieur de la cuve 2. Ce canal 10 s'étend depuis le voisinage du fond 2D de la cuve (par exemple à un niveau proche du niveau minimum d'huile dans la cuve - marque N1, mais de préférence depuis un niveau proche du niveau maximum d'huile dans la cuve - marque N2) jusqu'au voisinage du bord supérieur 2A de la cuve. Le bord supérieur 10A du canal est situé en dessous du plan horizontal dans lequel s'étend le bord 2A de la cuve 2. Le canal 10 a une profondeur P variable (profondeur mesurée à partir de la paroi intérieure 2C de la cuve et perpendiculairement à cette paroi). Cette profondeur s'accroît dans la direction du bord supérieur, cette profondeur est nulle au voisinage du fond de la cuve et s'accroît progressivement vers le bord 10A où la profondeur est maximale. Cette profondeur maximale est par exemple comprise entre 2 et 5 cm. La section de passage du canal 10 dans un plan perpendiculaire à la paroi 2C est sensiblement hemi ou semi circulaire jusqu'au voisinage de son bord libre 10A. Au voisinage du bord libre 10A, le canal présente une partie évasée 10B. La ligne médiane 10C du canal qui est défini par l'arête du canal la plus écartée de la paroi 2C, comporte un premier tronçon 10C1 formant un angle α compris entre 3 et 15°, de façon avantageuse d'environ 6° avec la paroi 2C, et un deuxième tronçon 10C2 prolongeant le premier tronçon et suivant un rayon de courbure R (courbure vers l'extérieur de la cuve) supérieur à la profondeur maximale du premier tronçon, avantageusement compris entre 2 et 8 cm, par exemple de 3 à 5 cm.

La cuve présente le long de ses faces latérales longitudinales opposées 2E,2F, deux cornières ou glissières 2G destinées à recevoir les bords verticaux 9A,9B de la paroi 9. Cette paroi 9 présente une partie inclinée 9E qui prend appui sur les glissières 2G de manière à définir un passage entre les zones Z1 et Z2 de la cuve en dessous du bord inférieur 9F, passage situé sous le niveau minimum d'huile de la cuve (N1). La paroi 9 présente une série d'ouvertures 9C situées au dessus du niveau maximum d'huile de cuisson N2 dans la cuve. Ces ouvertures sont agencées pour permettre le passage de mousse ou d'écume de la zone de cuisson Z2 vers la zone Z1. Ces ouvertures sont donc situées à un niveau supérieur au niveau de liquide de cuisson dans lequel sont plongés les aliments à cuire, par exemple placés dans un panier. La paroi 9 est prolongée par un plat 9D protégeant la partie de l'élément chauffant située dans la zone Z1, en particulier empêchant que des projections d'huile ou de graisse ne se dépose sur la partie de l'élément chauffant ou de l'élément apportant de l'énergie à l'élément chauffant, lors de mouvement du panier (non représenté à la figure 1), par exemple lors d'une opération d'égouttage de produits cuits ou frits. Ce plat 9D présente une extrémité 9D1 prenant appui sur le bord supérieur 2A de la cuve.

Des avantages de l'appareil de cuisson de la figure 1 sont :
- facilité de vidange de la cuve (cette dernière peut le cas échéant être munie d'une ou de poignée pour faciliter sa préhension) ;
- pas de problèmes d'isolation thermique entre le dispositif de commande, le support ou le couvercle et la résistance chauffante ;
- perte réduite de volume de la cuve due au placement de la résistance chauffante ;
- système anti débordement (paroi 9) ;
- protection de la partie de l'élément chauffant au voisinage de sa connexion au dispositif de commande (partie 9D) ;
- facilité de nettoyage de la cuve, de l'élément chauffant ;
- le basculement de la cuve pour sa vidange peut se faire lorsque la cuve est encore placée sur la support 1, ce basculement étant alors facilité par la présence de poignée sur le support 1, le basculement de la cuve avec le support peut par exemple être opéré en utilisant des gants de protection thermique, le cas échéant la cuve peut être attachée ou fixée au support 1 de manière temporaire par des moyens de fixation, de tels moyens tels que des papillons, des lamelles, des clips, etc. sont utiles pour prévenir tout risque de déboîtement de la cuve hors du support lors d'une opération de vidange (la vidange de la cuve est effectuée après avoir enlevé l'élément chauffant et le dispositif de commande, la paroi 9 peut le cas échéant être replacée avant une opération de vidange pour contrôler le flot de milieu de cuisson hors de la cuve) ;
- lors d'une opération de vidange, la paroi 9 peut être remplacée par un élément filtrant apte à retenir des saletés présentes dans le milieu de cuisson ;
- etc.

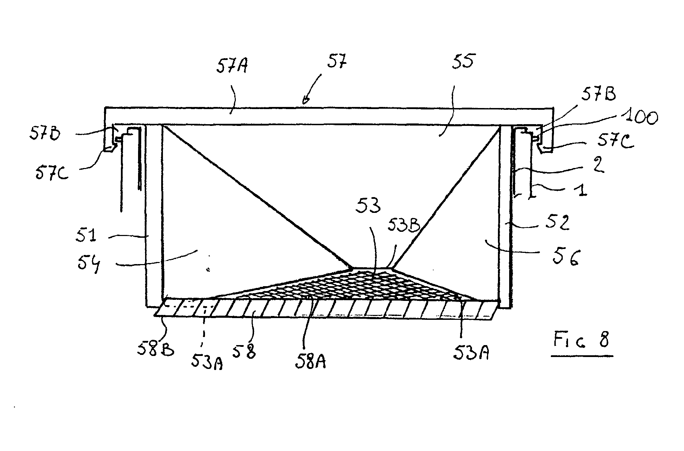

La figure 7 est une vue d'un appareil de cuisson similaire à celui de la figure 1, si ce n'est que le canal 10 avec bec verseur est dirigé vers le côté du support 1 opposé au côté du support associé au dispositif de commande 4. Le panier 11 est relié à une poignée 12 par un système, par exemple un système constitué de bras fixe ou par un système du type décrit dans EP0162482.

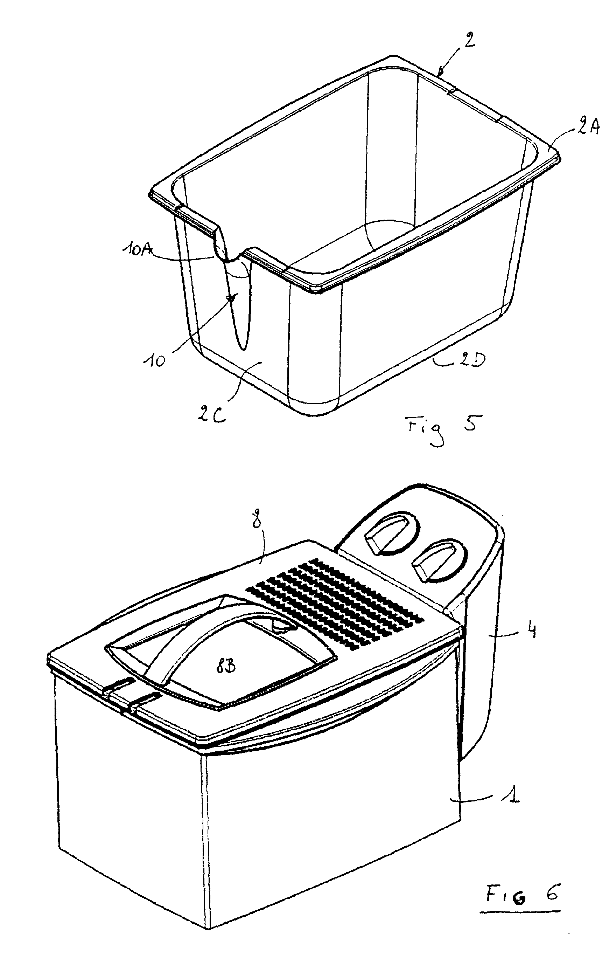

Ainsi qu'il ressort de la figure 5, le système 13 est partiellement logé dans le canal 10 lorsque le panier est dans la cuve de cuisson 2. Le canal 10 est par exemple muni de moyens 14 tel que des plats pour attacher une partie du système au canal lorsque le panier est en position de cuisson ou lorsqu'on déplace le panier dans la cuve par un mouvement de la poignée. Dans la forme de réalisation représentée, le système 13 comporte
- deux plats 13A attachés au panier 11,
- une première pièce en U 13B dont les extrémités sont reliées à pivotement aux plats 13A, ladite première pièce présentant une ou des pattes 13B1 formant bras de levier,
- une deuxième pièce en U 13C dont les extrémités sont reliées à pivotement aux plats 13A,
- un support métallique 13D sur lequel sont montées à pivotement lesdites première et deuxième pièces,
- un support 13E métallique ou non solidaire su support métallique 13D et présentant une ou des fentes 13E1 dans laquelle ou lesquelles coulisse(nt) une ou des pièces de liaison 13F,
- une poignée 12 montée à pivotement à la ou les pièces de liaison, cette dernière étant connectée ou associée au bras de levier 13B1, ladite poignée présentant une tête 13G1 coopérant avec une surface du support 1 de la cuve ou une surface du support 13E pour tirer sur le bras de levier lors d'un mouvement vers le haut de la poignée 12, ce mouvement se traduisant en un mouvement vers le haut du panier.

La figure 8 montre un élément filtrant 50 dont les bords latéraux 51,52 sont agencés pour glisser dans les cornières ou glissières 2G de la cuve 2. Entre lesdits bords latéraux 51,52 s'étend un treillis filtrant 53 ou un support destiné à porter une couche filtrante. Dans la forme représentée, un treillis filtrant réalisé en acier inoxydable a été utilisé. Ce treillis filtrant 53 présente au moins une partie de forme sensiblement quadrilatère, cette forme s'étendant entre un bord 53A avec une longueur LT variant entre une longueur maximale correspondant sensiblement à la distance séparant les cornières 2G entre elles et un bord 53B avec une longueur minimale correspondant sensiblement à la largeur du canal 7 au niveau où se situe le bord 53B lorsque l'élément filtrant est placé dans la cuve 2. Le treillis filtrant 53 s'étend avantageusement dans un plan incliné par rapport au fond de la cuve 2D ou par rapport à un plan horizontal lorsque la cuve est placée dans sa position d'utilisation. L'inclinaison du treillis par rapport au fond 2D ou à un plan horizontal est par exemple comprise entre 5° et 60°, en particulier entre 15° et 45°, de façon préférentielle entre 20° et 40°. Des parois guides 54,55,56 (éventuellement ajourées, mais de préférence non ajourées) sont connectées aux bords du treillis filtrant 53 et assurent le guidage de l'huile ou graisse de cuisson vers le treillis 53. Lorsque les parois 54,55,56 sont pleines ou sensiblement pleines, elles permettent également d'éviter, lors d'une opération de vidange de la cuve par renversement de celle-ci, le passage d'une trop grande quantité d'huile ou graisse de cuisson vers le canal 7 ou un débordement accidentel d'une quantité d'huile ou de graisse.

Un moyen 57 est avantageusement prévu pour attacher l'élément filtrant à la cuve 2 ou de préférence au support 1 de la cuve 2. Un tel moyen est avantageux pour éviter un mouvement de l'élément filtrant hors de la cuve lors d'une opération de vidange de celle-ci. Ce moyen 57 est par exemple réalisé par des ergots ou autres systèmes de clips ou de renfoncement coopérant avec un bord ou rainure ou protubérance de la cuve ou du support 1. Au cas où le moyen 57 assure un maintien en position de l'élément filtrant lors du renversement de la cuve, l'élément filtrant ne doit pas être munis de bords latéraux devant glisser dans les cornières ou glissières d'une cuve 2. Le moyen 57 est par exemple réalisé par une latte 57A présentant à ses extrémités deux ouvertures 57B destinées à recevoir le bord supérieur de la cuve et du support 1. L'ergot 57C est agencé pour coopérer avec une protubérance 100 du support 1.

Le bord 53A du treillis est avantageusement associé à un ou des plats 58 destinés à éviter le passage de saletés ou grillons du treillis 53 vers le fond de la cuve lorsque la cuve est rétablie en position horizontale après un mouvement de pivotement. Ce ou ces plats présentent un bord supérieur 58A situé à un niveau supérieur du bord 53A lorsque la cuve est en position horizontale ou en position d'utilisation. Lorsque l'élément filtrant est placé dans la cuve, le ou les plats forment avantageusement une rampe le long de laquelle les saletés proches du fond de la cuve 2D se déplacent lors d'un basculement ou renversement ou pivotement partiel de la cuve.
Le bord inférieur 58B du plat ou des plats 58 est avantageusement adapté pour suivre la forme du fond 2D de la cuve. Selon une forme de réalisation, plusieurs plats 58 sont utilisés, lesdits plats étant des lames flexibles, de sorte que lors du placement de l'élément filtrant 50 dans la cuve 2, les lames 58 appuient contre le fond. Les lames 58 se déforment alors élastiquement et assurent une force de maintien ou de contact entre les ergots 57C et la protubérance 100.

L'élément filtrant 50 peut être utilisé avec d'autres cuves de cuisson, en particulier avec d'autres friteuses.

Lors d'une utilisation d'un filtre 50, il peut être utile d'effectuer un léger basculement de la cuve dans un sens opposé au sens de basculement pour une opération de filtration, de manière à amener sensiblement toutes les saletés présente au fond de la cuve vers une zone de la cuve où l'élément filtrant 50 ne doit pas être placé.

L'opération de filtration peut le cas échéant être une opération de filtration partielle, c'est-à-dire une opération pour filtrer qu'une partie de l'huile ou la graisse présente dans la cuve. Selon une forme de réalisation, cette opération est effectuée sans passage d'huile ou graisse hors de la cuve. Par exemple, la cuve est pivotée légèrement et progressivement pour amener les saletés présentes sur le fond de la cuve à glisser sur le treillis 53 en passant au-dessus du bord 58A. Lorsque sensiblement toutes les saletés sont sur le treillis 53, la cuve est progressivement remise dans sa position normale. Lors de ce mouvement le ou les plats 58 retiennent les saletés sur le treillis 53. L'élément filtrant 50 est ensuite retiré de la cuve pour éliminer les saletés présentes sur le treillis.

Dans la description, on a utilisé de l'huile en tant que milieu de cuisson, il est clair que d'autres milieux de cuisson sont possibles, tels que de la graisse, de l'eau, etc.

La cuve et/ou le support et/ou le dispositif de commande peuvent être munis d'un ou de systèmes de sécurité empêchant de retirer la cuve et/ou élément chauffant tant que la température de cette dernière ou de ce dernier est supérieur à une température déterminée, ou indiquant que le retrait de la cuve et/ou de l'élément chauffant peut ou ne peut pas être opéré.

Selon une forme de réalisation possible, l'appareil comporte une cuve présentant deux canaux distincts avec bec verseur, dans un premier desdits canaux s'étend partiellement une partie de l'élément chauffant ou du moyen d'apport en énergie lorsque l'élément chauffant est situé dans la cuve, tandis que dans l'autre canal s'étend au moins une partie du système reliant la poignée au panier lorsque ce dernier est dans la cuve.

## Revendications

1. Appareil de cuisson comportant au moins : une cuve de cuisson (2) présentant un fond (2D) et un bord supérieur (2A) définissant l'ouverture supérieure de la cuve, ladite cuve étant avantageusement amovible par rapport à un support (1), au moins un élément chauffant (3) associé à un moyen d'apport d'énergie (7) et éventuellement un panier (11) relié par un système (13) à une poignée (12), dans lequel au moins une pièce choisie parmi le groupe constitué de l'élément chauffant (3) et le panier (11) est apte à être placée dans la cuve (2) en passant par l'ouverture supérieure de la cuve, **caractérisé en ce que** la cuve (2) présente le long d'une de ses parois latérales (2C) une déformation définissant un canal (10) dont l'extrémité (10A) forme un bec verseur de vidange de la cuve, et **en ce qu'**un moyen (7 ;13) associé à une pièce (3 ;11) apte à être placée dans la cuve par son ouverture supérieure ou une partie de la pièce (3 ;11) s'étend au moins partiellement dans une partie du canal lorsque ladite pièce est placée au voisinage du fond de la cuve.

2. Appareil de cuisson suivant la revendication 1, ledit appareil comportant au moins : une cuve de cuisson (2) présentant un bord supérieur, ladite cuve étant avantageusement amovible par rapport à un support, et au moins un élément chauffant (3) placé dans la cuve, ledit élément chauffant étant associé à un moyen d'apport d'énergie (7) qui passe au dessus d'un bord de la cuve, l'appareil comportant éventuellement un panier (11) relié par au moins un système (13) à une poignée (12), en particulier un panier avec poignée multi fonctionelle, **caractérisé en ce que** la cuve (2) présente le long d'une (2C) de ses parois latérales une déformation définissant un canal (10) dont l'extrémité (10A) forme un bec verseur de vidange de la cuve, et **en ce que** l'élément chauffant (3) ou le moyen d'apport d'énergie (7) s'étend au moins partiellement dans une partie du canal (10) lorsque l'élément chauffant (3) est placé dans la cuve.

3. Appareil selon la revendication 2, **caractérisé** en ce le canal (10) présente un bord supérieur dont au moins une partie est située en dessous du bord supérieur de la paroi (2C) le long de laquelle ledit canal s'étend.

4. Appareil suivant la revendication 3, **caractérisé en ce qu'**un passage est formé entre le bord supérieur (10A) du canal et un plan horizontal dans lequel s'étend le bord supérieur de la paroi (2C) le long de laquelle ledit canal s'étend, et **en ce que** l'élément chauffant (3) ou le moyen d'apport d'énergie (7) ou le système (13) reliant le panier à la poignée présente une partie traversant ledit passage.

5. Appareil suivant l'une quelconque des revendications précédentes, **caractérisé en ce qu'**il comporte en outre un support (1) pour la cuve, un dispositif de commande (4) solidaire de l'élément chauffant (3) ou comportant des moyens pour y fixer l'élément chauffant (3) ou le moyen d'apport d'énergie (7) à l'élément chauffant, ledit support (1) présentant des moyens de fixation coopérant avec le dispositif de commande.

6. Appareil suivant la revendication précédente, **caractérisé en ce que** le support (1) présente un passage ou fenêtre dans lequel est engagée au moins une partie du bord supérieur (10A) du canal (10) de la cuve.

7. Appareil suivant l'une quelconque des revendications précédentes, **caractérisé en ce qu'**il comporte un couvercle (8) avantageusement muni d'un filtre (8C).

8. Appareil suivant l'une quelconque des revendications précédentes, **caractérisé en ce qu'**il comporte un moyen (9) placé dans la cuve (2) pour former une zone protégée (Z1) adjacente à la zone de cuisson (Z2), ledit moyen étant adapté pour assurer le passage de mousse ou écume de cuisson de la zone de cuisson vers la zone protégée, lorsque l'écume ou la mousse dépasse un niveau prédéterminé dans la zone de cuisson (Z2).

9. Appareil suivant la revendication précédente, **caractérisé en ce que** le moyen (9) est placé dans la cuve de manière à définir une zone protégée (Z1) adjacente du canal (10) de la cuve.

10. Appareil suivant l'une quelconque des revendications précédentes, **caractérisé en ce qu'**il comporte un moyen de protection (9D) de la partie de l'élément chauffant ou du moyen d'apport d'énergie au voisinage du passage défini au dessus du bord supérieur du canal de la cuve.

11. Appareil suivant la revendication précédente, **caractérisé en ce que** le moyen de protection (9D) est formé par une prolongation du moyen (9) placé dans la cuve pour former une zone protégée (Z1) adjacente du canal (10) de la cuve.

12. Appareil suivant l'une quelconque des revendications précédentes, **caractérisé en ce que** le canal (10) de la cuve a une profondeur (P) définie par rapport à la paroi (2C) de la cuve le long de laquelle le canal s'étend, ladite profondeur variant d'un minimum au voisinage de l'extrémité du canal adjacente du fond (2D) de la cuve à un maximum au voisinage de son bord supérieur (2A).

13. Appareil suivant la revendication précédente, pour lequel la cuve présente une marque de niveau minimum (N1) et/ou une marque de niveau maximum (N2) de milieu de cuisson, **caractérisé en ce que** le canal (10) de la cuve s'étend depuis un niveau proche du niveau minimum de liquide de cuisson dans la cuve, de préférence depuis un niveau proche du niveau supérieur de liquide de cuisson.

14. Appareil suivant l'une des deux revendications précédentes, **caractérisé en ce que** la profondeur (P) du canal au voisinage du bord supérieur (2A) est d'au moins 1 cm, en particulier d'au moins 2 cm.

15. Appareil de cuisson suivant l'une quelconque des revendications précédentes, **caractérisé en ce qu'**il comporte un élément filtrant (50) pour filtrer le liquide de cuisson ou une partie de celui-ci, en particulier lors d'une opération de vidange au moins partielle de la cuve de cuisson.

16. Appareil de cuisson suivant la revendication 15, **caractérisé en ce que** l'élément filtrant présente au moins une des particularités suivantes, de préférence plusieurs des particularités suivantes :
• des bords latéraux pour glisser dans des cornières ou glissières de la cuve ;
• un treillis filtrant en forme de trapèze, dont le petit côté est dirigé vers le canal ou gouttière d'évacuation de liquide de cuisson hors de la cuve ;
• un treillis filtrant qui lorsqu'il est placé dans la cuve forme un angle compris entre 5 et 60° avec le fond de la cuve ou avec un plan horizontal lorsque la cuve est en position d'utilisation ;
• une ou des parois de guidage guidant le passage de liquide de cuisson vers le treillis ;
• un ou des plats associés au treillis filtrant, le ou lesdits plats présentant un bord supérieur situé à un niveau au-dessus du treillis filtrant ou d'une partie du treillis filtrant tournée vers le fond de la cuve, lorsque l'élément filtrant est placé dans la cuve ;
• un moyen pour attacher l'élément filtrant à la cuve ou au support de la cuve, ledit moyen empêchant l'élément filtrant de sortir hors de la cuve lors d'un renversement ou d'un basculement de la cuve ;
• un moyen pour attacher l'élément filtrant au support de la cuve, ledit moyen empêchant l'élément filtrant de sortir hors de la cuve et empêchant un mouvement de la cuve par rapport au support lors d'un renversement ou d'un basculement de la cuve ;
• des lames élastiques agencées pour prendre appui sur le fond de la cuve et pour former une rampe le long de laquelle des saletés se déplacent vers l'élément filtrant lors d'un renversement ou basculement de la cuve.
